# EUROPEAN PATENT SPECIFICATION

(11) **EP 3 981 299 B1**
(45) Date of publication and mention of the grant of the patent: **03.01.2024**
(21) Application number: 21200717.3
(22) Date of filing: 04.10.2021
(51) Int. Cl.: A47J 36/34, B23Q 3/08, B25B 11/00

(54) **HOLDER AND METHOD FOR SECURING AND RELEASING AN ITEM BY SUCTION**
HALTER UND VERFAHREN ZUR SICHERUNG UND FREIGABE EINES GEGENSTANDES DURCH SAUGEN
SUPPORT ET PROCÉDÉ DE FIXATION ET DE LIBÉRATION D'UN ARTICLE PAR ASPIRATION

(30) Priority: 05.10.2020 DK PA202070674
(43) Date of publication of application: 13.04.2022
(73) Proprietor: Handigood ApS, 8464 Galten (DK)
(72) Inventor: JENSEN, John, 1260 Copenhagen K (DK)
(74) Representative: Nordic Patent Service A/S

(56) References cited:
- EP-A1- 2 682 227
- FR-A1- 2 950 556
- US-A1- 2013 270 757
- US-A1- 2015 352 694

## Description

### TECHNICAL FIELD

The disclosure relates to a holder and method for securing an item, such as a foodstuff receptacle, and more particularly to a holder and method for securing a foodstuff receptacle on a top, such as a kitchen top, a tabletop, or a countertop.

### BACKGROUND

A holder for securing a foodstuff receptacle by means of suction created by a suction pump driven by an electric drive motor is known. This known holder creates a partial vacuum between the top of the holder and the bottom of the foodstuff receptacle to secure the foodstuff receptacle to the holder by suction. The holder itself is secured to the countertop or the like by several suction cups permanently attached to the bottom face of the holder, with the suction cups creating a releasable connection to the countertop. This known holder is aimed at facilitating the life of e.g. people that can only use one hand and thus cannot simultaneously hold the foodstuff receptacle and open or close the foodstuff receptacle with the other hand. The known holder represented a significant improvement. However, with the known holder the removal of the vacuum when the item is to be removed from the holder requires patience from the user since the time required for the partial vacuum that holds the item to the holder to disappear is relatively long. In the known holder, the vacuum pump is switched off when the item is to be removed from the holder. Atmospheric pressure is re-established by leakage through the vacuum pump, and this process takes time and forces the user to wait sometime before the user can remove the item from the holder, thereby reducing the practical usefulness of the holder. Further, suction cups require a substantially perfectly smooth surface to attach the holder securely thereto. This requirement prevents the use of the holder on less smooth surfaces.

US20130270757A1 discloses a holder according to the preamble of claim 1.

EP-A-2682227 discloses a method according to the preamble of claim 11 and a holder according to the preamble of claim 13.

### SUMMARY

It is an object to provide a holder that overcomes or at least reduces the problems mentioned above.

The foregoing and other objects are achieved by the features of the independent claims. Further implementation forms are apparent from the dependent claims, the description, and the figures.

According to a first aspect, there is provided a holder according to claim 1.

By providing a bleed valve that is automatically moved to the open position when the vacuum pump is deactivated, atmospheric pressure is reestablished practically instantaneously, and the user can remove the item from the holder without substantial delay. Further, a suction pad connected to a vacuum pump is capable of providing sufficient adherence on surfaces that are not perfectly smooth, thus allowing the holder to be used on a larger variety of surface types, thereby increasing the usefulness of the holder.

In a possible implementation form of the first aspect, the controller is coupled to one or more of the bleed valves, the drive motor, and the manual control element.

In a possible implementation form of the first aspect, the bleed valve is resiliently biased to its open position. Thus, the bleed valve will automatically return to its open position when power is switched off, thereby ensuring that the item can always be easily removed from the holder and the holder can always be easily removed from the countertop or the like.

In a possible implementation form of the first aspect, the bleed valve is an electronic valve, the electronic bleed valve preferably being configured to move to its open position when it is in receipt of an electric signal from the controller.

In a possible implementation form of the first aspect, the drive motor is an electric drive motor, preferably a DC electric drive motor.

In a possible implementation form of the first aspect, the manual control element is a switch, preferably a toggle switch or a push switch.

In a possible implementation form of the first aspect, the face is a substantially flat face and preferably configured for attaching to a side of the item by suction.

In a possible implementation form of the first aspect, the face is provided with a gasket surrounding the suction port.

In a possible implementation form of the first aspect, the drive motor is an electric drive motor that is powered by a preferably rechargeable battery.

In a possible implementation form of the first aspect, the holder comprises a top face that is parallel with a bottom face, and wherein the top face preferably faces opposite to the bottom face.

In a possible implementation form of the first aspect, the at least partial vacuum automatically and instantaneously disappears when the vacuum pump is deactivated.

According to a second aspect is provided a method according to claim 11.

In a possible implementation form of the second aspect, the method comprises both activating the vacuum pump and moving the bleed valve to the closed position in response to a signal from a manual switch, for securing the item to the holder by vacuum.

In a possible implementation form of the second aspect, the method comprises both deactivating the vacuum pump and moving the bleed valve to the open position in response to a signal from a manual switch for instantly releasing the item from the holder.

In a possible implementation form of the second aspect, the item is a receptacle for receiving foodstuff, such as a pan, frying pan, saucepan, a pot, a casserole, a tin can, a jar, a glass, a bottle, a jug, a carton, a chopping board, a sheet pan, a griddle, a baking stone, a wok, a cup, a mug, or a bowl.

According to a third aspect there is provided a holder according to claim 13 .

By reversing the vacuum pump for a limited time in response to a deactivation signal, the vacuum pump acts for the limited period of time like a regular pump, thereby pumping air to the vacuum port and thus rapidly removing the vacuum that secured the item to the holder and hence allowing the user to remove the item from the holder practically instantaneously.

These and other aspects will be apparent from the embodiments described below.

### BRIEF DESCRIPTION OF THE DRAWINGS

In the following detailed portion of the present disclosure, the aspects, embodiments, and implementations will be explained in more detail with reference to the example embodiments shown in the drawings, in which:
Fig. 1 is an elevated view of a holder according to an embodiment,
Fig. 2 is a side view of the holder of the embodiment of Fig. 1 placed on a countertop or the like and with a food receptacle in the form of a saucepan placed on the holder,
Fig. 3 is a side view of the holder of the embodiment of Fig. 1,
Fig. 4 is a top view of the holder of the embodiment of Fig. 1,
Fig. 5 is a bottom view of the holder of the embodiment of Fig. 1,
Fig. 6 is a diagrammatic representation of the holder of the embodiment of Fig. 1, showing the pneumatic and electric system of the holder, and
Fig. 7 is a diagrammatic illustration of a holder according to another embodiment.

### DETAILED DESCRIPTION

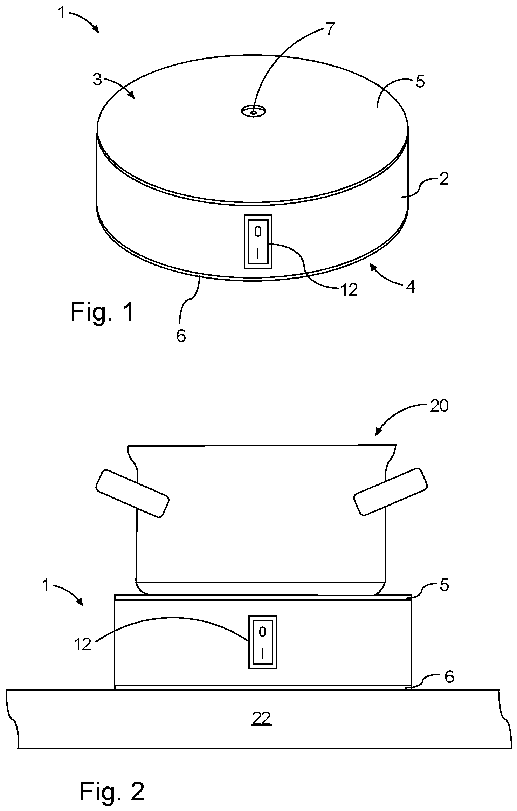

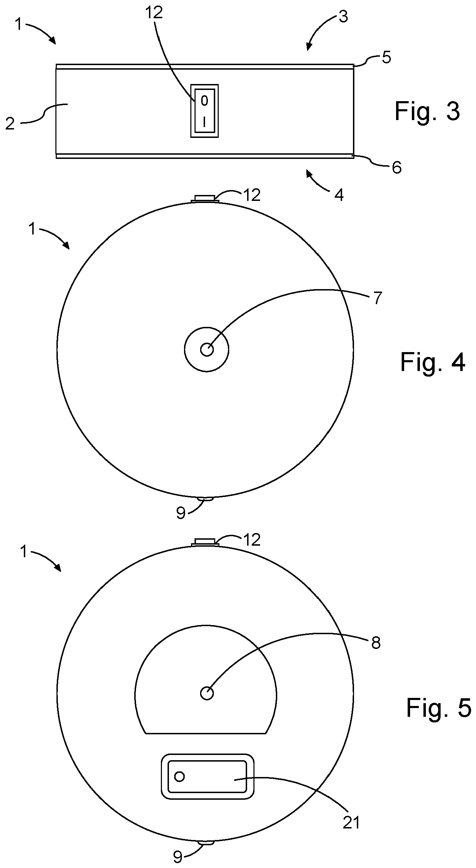

Figs. 1 to 6 disclose an embodiment of the holder 1 for securing an item 20, such as a foodstuff receptacle. The foodstuff receptacle can be a household item, such as a pan (e.g. frying pan or saucepan), a pot, a casserole, a tin can, a jar, a glass, a bottle, a jug, a carton, a wok, a cup, a mug, a chopping board, a sheet pan, a griddle, a baking stone or a bowl. The holder 1 serves to secure the item 20 relative to a support surface, such as for example a countertop, a desktop, or a tabletop 22, so that the item 20 can be exposed to force without moving or tilting, for example for opening or closing the item 20 using one hand only.

The holder 1 comprises a housing 2, which is shown as a disc-shaped housing in the embodiment. The housing 2 has a substantially flat top face 3 and a substantially flat bottom face 4, that extend parallel and face away from one another. However, the peripheral surface of the housing 2 that connects the top face 3 to the bottom face 4 can have any desirable outline, such as a (rounded) polygon outline, an elliptical or other rounded outline, and it is understood that the outline does not need to be circular as shown in the figures. A top suction port 7 is arranged in the top face 3. The top face 3 is configured to have the item 20 placed thereon.

A bottom suction port 8 is arranged in the bottom face 4. The bottom face 4 is configured to be placed on a flat supportive surface, such as a desktop, tabletop, or countertop 22.

A top gasket 5 surrounds the top suction port 7. The bottom face 4 is provided with a bottom gasket 6 surrounding the bottom suction port 8.

In an embodiment, the top gasket 5 and/or bottom gasket 6 are made of natural and/or synthetic rubber or another suitable polymer or mixture thereof. In an embodiment, the top gasket 5 and/or bottom gasket 6 are made from a foam rubber material (natural and/or synthetic rubber or another suitable polymer).

The top gasket 5 surrounding the top suction port 7 on the top face 3 forms a top suction pad, and the bottom gasket 6 surrounding the top suction port 8 on the bottom face 4 forms a bottom suction pad.

The holder 1 is provided with at least one vacuum pump 14. In the embodiment, the vacuum pump 14 is driven by a DC electric drive motor 13. In the shown embodiment the electric drive motor 13 is powered by a (rechargeable) battery 11, and a lid 21 for accessing the (rechargeable) battery 11 is provided in the bottom face 4. The bottom gasket 6 is provided with an aperture surrounding the lid 21, for providing access to the lid 21. In another embodiment (not shown) the electric drive motor 13 is powered by an external electric DC source, that can be plugged in through a socket 9. If the battery 11 is a rechargeable battery, the battery 11 can be recharged with an external electric DC source through the socket 9. A switch 12, preferably a toggle switch, allows a user to activate and deactivate the electric drive motor 13, i.e. to activate and deactivate the vacuum pump 14.

The vacuum pump 14 is connected to the top suction port 7 for creating a partial vacuum between the top face 3 and the bottom side of the item 20 for securing the item 20 to the holder 1 by suction. The vacuum pump 14 is also connected to the bottom suction port 8 for creating a partial vacuum between the bottom face 4 and the table-, counter- or desktop 22 for securing the holder 1 to the table-, counter- or desktop 22 by suction. Thus, when a partial vacuum is created by the vacuum pump 14, the partial vacuum is created between the item 20 and the holder 1 and between the countertop 22 and the holder 1, thus securing the item 20 relatively to the countertop 22 to prevent movement or tilting of the item 20 relative to the countertop 22 thereby allowing a person to work with the item 20 without needing to hold the item 20 to prevent the item 20 from moving or tilting.

The suction side of the vacuum pump 14 is connected to the top suction port 7 via a main suction line 15 and a top branch suction line 16. The suction side of the at least one vacuum pump 14 is connected to the bottom suction port 8 via a main suction line 15 and a bottom branch suction line 17.

In the embodiment, a bleed line 18 connects the main suction line 15 to atmosphere via a bleed valve 19. The bleed valve 19 is preferably is a 2-way valve with an open and a closed position. The bleed valve 19 is electronically controlled and biased (preferably resiliently biased) towards its open position, i.e. without electric power being applied to the bleed valve 19 it will move to its open position and connect the main suction line 15 to atmosphere, thereby removing any partial vacuum in the main suction line 15.

A controller 10 is operably connected to the switch 12, to the electric drive motor 13, to the bleed valve 19, to the (rechargeable) battery 11, and to the charging/DC power socket 9. The controller 10 is configured to activate and deactivate the electric drive motor 13 in response to a signal from the switch 12. Simultaneously, the controller 10 is configured to power the bleed valve 19 when the electric drive motor 13 is activated and the controller 10 is configured to end electric power to the bleed valve 19 when the electric drive motor 13 is deactivated. Thus, the controller 10 is configured to move the bleed valve 19 to its closed position upon powering up the electric drive motor 13 and is configured to move the bleed valve 19 to its open position when the electric drive motor 13 is deactivated.

By powering the bleed valve 19 when the signal from the switch 12 indicates that the vacuum pump 14 should be activated, it is ensured that a partial vacuum can build up in the main suction line 15 since the bleed line 18 will no longer be connected to atmosphere since the bleed valve 19 is moved to its closed position. Further, by ending power to the bleed valve 19 when the signal from the switch 12 indicates that the vacuum pump 14 should be deactivated, it is ensured that a partial vacuum in the main vacuum line 15 is punctured, i.e. atmospheric pressure is established in the main vacuum line 15 and the top- and bottom branch lines 16, 17 connected thereto. Thus, the partial vacuum that secures the item 22 to the holder 1 is instantaneously removed when the bleed valve 19 moves to its open position and the user can move the item 20 away from the holder 1. The same applies to the partial vacuum that secures the holder 1 to the countertop 22 so that the user can move the holder 1 away from the countertop 22.

In an embodiment without the bleed valve 19, atmospheric pressure will be restored in the main vacuum line 15 due to leakage through e.g. the vacuum pump 14, but this process will take time and the user will have to wait before being able to take the item 20 off the holder 1 and be able to take the holder 1 off the countertop 22.

The pneumatic and electric components of the holder 1 are preferably arranged inside the housing 2 and is ensured that the interior of the housing 2 has a connection to the atmosphere to ensure that the bleed valve 19 and the outlet port of the vacuum pump 14 have access to atmospheric pressure.

### Operation

The user places the holder 1 on the countertop 22 or the like and places the item 20 on the holder 1. The countertop 22 should preferably be flat and somewhat smooth so that the bottom gasket 6 can hermetically seal onto the surface of the countertop 22. Likewise, the bottom of the item 20 should be suitable for creating a hermetic seal with the top gasket 5.

Next, the user operates the switch 12 (moves the switch 12 to its "on" position), whereupon the controller 10 activates the electric drive motor 13 and thus the vacuum pump 14 and simultaneously, the controller 10 powers the bleed valve 19, thereby moving the bleed valve 19 to its closed position. The action of the vacuum pump 14 creates a partial vacuum in the main suction line 15 and the top and bottom branch suction lines 16, 17 which through the respective top and bottom suction ports 7, 8 create partial vacuums between the bottom face 4 and the countertop 22 and between top face 3 and the item 20, thereby securing by suction the holder 1 to the countertop 22 and securing by suction the item 20 to the holder 1.

When the item 20 is to be removed from the holder 1 and/or the holder 1 needs to be removed from the countertop 22, the user operates the switch 12 (moves the switch 12 to its "off position). In response to the signal from the switch 12, the controller 10 ends power to the bleed valve 19 and simultaneously the deactivates the electric drive motor 13, thereby deactivating the vacuum pump 14. The bleed valve 19 creates a fluidic connection between the main suction line 15 and the atmosphere, thereby rapidly removing the partial vacuum that secures the item 22 the holder 1 and secures the holder 1 to the countertop 22. Consequently, the item 20 can be removed from the holder 1, and the holder 1 can be removed from the countertop 22 substantially immediately after moving the switch 12 to its off position.

In an embodiment (not shown) the holder is provided with a top vacuum pump connected to the top vacuum port and provided with a bottom vacuum pump connected to the bottom vacuum port. In a variation of this embodiment, there is a manual switch for operating the top vacuum pump and another manual switch for operating the bottom vacuum pump. This embodiment allows the holder 1 to remain secured to the countertop 22 whilst the item 20 is removed from the holder 1 and e.g. for subsequently placing and securing another item 20 or the same item 20 on the holder 1. In this embodiment, there will be provided a top bleed valve for removing the partial vacuum between the top face 3 and the item 20 and a bottom bleed valve for removing the partial vacuum between the bottom face 4 and the countertop 22.

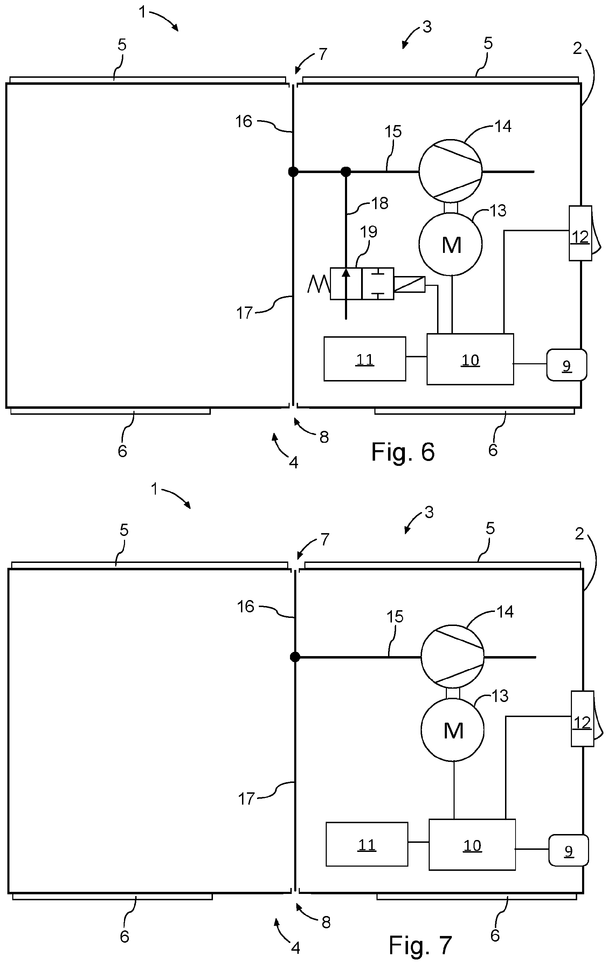

Fig. 7 shows another embodiment. In this embodiment, structures and features that are the same or similar to corresponding structures and features previously described or shown herein are denoted by the same reference numeral as previously used for simplicity. The embodiment of Fig. 7 is essentially identical to the embodiments described above, except that the embodiment of Fig. 7 does not have a bleed valve. Instead, both the drive motor 13 and the vacuum pump 14 are of the reversible type, so the vacuum pump 14 acts as regular pump, i.e. the vacuum pump 14 pumps air into the port that is connected to the vacuum line 15 when it is reversed. The controller 10 is configured to start the drive motor 13 and the vacuum pump 14 in the direction for creating a partial vacuum in the vacuum line 15 when the controller 10 receives an activation signal from the switch 12. The controller is also configured to reverse the direction of the drive motor 13 and the vacuum pump 14 for removing the partial vacuum in the vacuum line 15 when the controller 10 receives a deactivation signal from the switch 12. The controller may be configured to deactivate the drive motor 13 before reversing the drive motor 13.

By reversing the vacuum pump for a limited time in response to a deactivation signal, the vacuum pump acts for the limited period of time like a regular pump, thereby pumping air to the vacuum port and thus rapidly removing the vacuum that secured the item to the holder and hence allowing the user to remove the item from the holder practically instantaneously.

The various aspects and implementations have been described in conjunction with various embodiments herein. However, other variations to the disclosed embodiments can be understood and effected by those skilled in the art in practicing the claimed subject-matter, from a study of the drawings, the disclosure, within the scope defined in the appended claims. In the claims, the word "comprising" does not exclude other elements or steps, and the indefinite article "a" or "an" does not exclude a plurality. A single processor, controller, or other unit may fulfill the functions of several items recited in the claims. The mere fact that certain measures are recited in mutually different dependent claims does not indicate that a combination of these measured cannot be used to advantage.

The reference signs used in the claims shall not be construed as limiting the scope. Unless otherwise indicated, the drawings are intended to be read (e.g., cross-hatching, arrangement of parts, proportion, degree, etc.) together with the specification, and are to be considered a portion of the entire written description of this disclosure. As used in the description, the terms "horizontal", "vertical", "left", "right", "top", "bottom", "up" and "down", as well as adjectival and adverbial derivatives thereof (e.g., "horizontally", "rightwardly", "upwardly", etc.), simply refer to the orientation of the illustrated structure as the particular drawing figure faces the reader or relative to the gravitational field of the Earth.

## Claims

1. A holder (1) for securing an item (20) to the holder (1), the holder (1) comprising:
- a housing (2),
- the housing (2) having a face (3,4) configured for attaching to a side of the item (20),
- a suction port (7,8) arranged in the face (3,4),
- at least one vacuum pump (14) connected to the suction port (7,8) for creating at least a partial vacuum between the face (3,4) and the side of the item (20) for securing the item (20) to the holder (1) by suction,
- a drive motor (13) operably coupled the vacuum pump (14),
- a manual control element (12) coupled to a controller (10),
- a bleed valve (19) having at least a closed position and an open position,
- the bleed valve (19) fluidically connecting the suction port (7,8) to atmosphere in the open position, **characterized by**
- the controller (10) being configured:
to activate the drive motor (13) and to move the bleed valve (19) to the closed position in response to an activation signal from the manual control element (12), and
to deactivate the drive motor (13) and to move the bleed valve (19) to the open position in response to a deactivation signal from the manual control element (12) .

2. The holder (1) according to claim 1, wherein the controller (10) is coupled to the bleed valve (19), the drive motor (13), and the manual control element (12), and the bleed valve (19) is preferably resiliently biased to its open position.

3. The holder (1) according to any one of the preceding claims, wherein the bleed valve (19) is an electronic valve, the electronic bleed valve (19) preferably being configured to move to its open position when it is in receipt of an electric signal from the controller (10).

4. The holder (1) according to any of the preceding claims, wherein the drive motor (13) is an electric drive motor, preferably a DC electric drive motor.

5. The holder (1) according to any one of the preceding claims, wherein the manual control element (12) is a switch, preferably a toggle switch or a push switch.

6. The holder (1) according to any one of the preceding claims, wherein the face (3,4) is a substantially flat face and preferably configured for attaching to a side of the item (20) by suction.

7. The holder (1) according to any one of the preceding claims, wherein the face (3,4) is provided with a gasket (5,6) surrounding the suction port (7,8).

8. The holder (1) according to any of the preceding claims, wherein the drive motor (13) is an electric drive motor that is powered by a preferably rechargeable battery (11).

9. The holder (1) according to any one of the preceding claims, comprising a top face (3) that is parallel with a bottom face (4), and wherein the top face (3) preferably faces opposite to the bottom face (4).

10. The holder (1) according to any one of the preceding claims, wherein the at least partial vacuum automatically and instantaneously disappears when the vacuum pump (14) is deactivated.

11. A method for securing an item (20), such as a receptacle (20) for receiving foodstuff, the method comprising:
- providing a holder (1) having:
- a housing (2), the housing (2) having a face (3) configured for being secured to a side of the item (20), and at least one vacuum pump (14),
- creating by action of the vacuum pump (14) at least a partial vacuum between the face (3) and the side of the item (20) thereby securing the item (20) to the holder (1) by suction, and
- ending the partial vacuum by activation of a bleed valve (19) and thereby connecting the suction port (7,8) to atmosphere,
- said bleed valve (19) having a closed position and an open position,
**characterized by**
- both activating the vacuum pump (14) and moving the bleed valve (19) to the closed position in response to a signal from a manual switch (12), for securing the item (20) to the holder (1) by vacuum , and
- both deactivating the vacuum pump (14) and moving the bleed valve (19) to the open position in response to a signal from a manual switch (12) for instantly releasing the item (20) from the holder (1).

12. The method according to claim 11, wherein the item (20) is a receptacle for receiving foodstuff, such as a pan, frying pan, saucepan, a pot, a casserole, a tin can, a jar, a glass, a bottle, a jug, a carton, a chopping board, a sheet pan, a griddle, a baking stone, a wok, a cup, a mug, or a bowl.

13. A holder (1) for securing an item (20) to the holder (1), the holder (1) comprising:
- a housing (2),
- the housing (2) having a face (3,4) configured for attaching to a side of the item (20),
- a suction port (7,8) arranged in the face (3,4),
- a vacuum pump (14),
- a drive motor (13) operably coupled to the vacuum pump (14)
- at least one reversible vacuum pump (14) connected to the suction port (3,4),
- a manual control element (12) coupled to a controller (10),
- the controller (10) being configured to activate the drive motor (13) in response to an activation signal from the manual control element (12) for driving the vacuum pump for creating at least a partial vacuum between the face (3,4) and the side of the item (20) for securing the item (20) to the holder (1) by suction,
**characterized by**
- the drive motor being a reversible drive motor (13),
the vacuum pump being a reversible vacuum pump (14), and
- the controller (10) being configured to reverse the drive motor (13) at least for a limited period of time and to thereafter deactivate the drive motor (13), in response to a deactivation signal from the manual control element (12) for removing the at least a partial vacuum between the face (3,4) and the side of the item (20) for releasing the item (20) from the holder (1).

## Patentansprüche

1. Halterung (1) zum Befestigen eines Gegenstands (20) an der Halterung (1), wobei die Halterung (1) Folgendes aufweist:
- ein Gehäuse (2),
- wobei das Gehäuse (2) eine Fläche (3, 4) aufweist, die zum Anbringen an einer Seite des Gegenstands (20) ausgelegt ist,
- eine Ansaugöffnung (7, 8), die in der Fläche (3, 4) angeordnet ist,
- mindestens eine Unterdruckpumpe (14), die mit der Ansaugöffnung (7, 8) verbunden ist, um mindestens ein teilweises Vakuum zwischen der Fläche (3, 4) und der Seite des Gegenstands (20) zu erzeugen, um den Gegenstand (20) durch Ansaugen an der Halterung (1) zu befestigen,
- einen Antriebsmotor (13), der funktionell mit der Unterdruckpumpe (14) gekoppelt ist,
- ein manuelles Steuerelement (12), das mit einer Steuervorrichtung (10) gekoppelt ist,
- ein Ablassventil (19), das mindestens eine geschlossene Stellung und eine offene Stellung aufweist,
- wobei das Ablassventil (19) in der offenen Stellung die Ansaugöffnung (7, 8) fluidisch mit der Atmosphäre verbindet,
**gekennzeichnet dadurch, dass**
- die Steuervorrichtung (10) dazu ausgelegt ist:
in Folge eines Aktivierungssignals von dem manuellen Steuerelement (12) den Antriebsmotor (13) zu aktivieren und das Ablassventil (19) in die geschlossene Stellung zu bewegen, und
in Folge eines Deaktivierungssignals von dem manuellen Steuerelement (12) den Antriebsmotor (13) zu deaktivieren und das Ablassventil (19) in die offene Stellung zu bewegen.

2. Halterung (1) nach Anspruch 1, wobei die Halterung (10) mit dem Ablassventil (19), dem Antriebsmotor (13) und dem manuellen Steuerelement (12) gekoppelt ist und das Ablassventil (19) bevorzugt in seiner offenen Stellung elastisch vorgespannt ist.

3. Halterung (1) nach einem beliebigen der vorhergehenden Ansprüche, wobei es sich bei dem Ablassventil (19) um ein elektronisches Ventil handelt, wobei das elektronische Ablassventil (19) bevorzugt dazu ausgelegt ist, sich in seine offene Stellung zu bewegen, wenn es ein elektrisches Signal von der Steuervorrichtung (10) empfängt.

4. Halterung (1) nach einem beliebigen der vorhergehenden Ansprüche, wobei es sich bei dem Antriebsmotor (13) um einen elektrischen Antriebsmotor handelt, bevorzugt einen elektrischen Antriebsmotor mit Gleichstrom.

5. Halterung (1) nach einem beliebigen der vorhergehenden Ansprüche, wobei es sich bei dem manuellen Steuerelement (12) um einen Schalter handelt, bevorzugt um einen Kippschalter oder einen Drucktastschalter.

6. Halterung (1) nach einem beliebigen der vorhergehenden Ansprüche, wobei es sich bei der Fläche (3, 4) um eine im Wesentlichen flache Fläche handelt und diese bevorzugt zum Anbringen an einer Seite des Gegenstands (20) durch Ansaugen ausgelegt ist.

7. Halterung (1) nach einem beliebigen der vorhergehenden Ansprüche, wobei die Fläche (3, 4) mit einer Dichtung (5, 6), die die Ansaugöffnung (7, 8) umgibt, versehen ist.

8. Halterung (1) nach einem beliebigen der vorhergehenden Ansprüche, wobei es sich bei dem Antriebsmotor (13) um einen elektrischen Antriebsmotor handelt, der bevorzugt durch eine wiederaufladbare Batterie (11) angetrieben wird.

9. Halterung (1) nach einem beliebigen der vorhergehenden Ansprüche, die eine obere Fläche (3) aufweist, die parallel zu der unteren Fläche (4) ist, und wobei die obere Fläche (3) bevorzugt der unteren Fläche (4) abgewandt ist.

10. Halterung (1) nach einem beliebigen der vorhergehenden Ansprüche, wobei das zumindest teilweise Vakuum automatisch und sofort verschwindet, wenn die Unterdruckpumpe (14) deaktiviert wird.

11. Verfahren zum Befestigen eines Gegenstands (20), wie zum Beispiel eines Behälters (20) zum Aufnehmen von Lebensmitteln, wobei das Verfahren Folgendes umfasst:
- Bereitstellen einer Halterung (1), die Folgendes aufweist:
- ein Gehäuse (2), wobei das Gehäuse (2) eine Fläche (3), die dazu ausgelegt ist, an einer Seite des Gegenstands (20) befestigt zu werden, und mindestens eine Unterdruckpumpe (14) aufweist,
- Erzeugen durch Betätigung der Unterdruckpumpe (14) mindestens eines teilweisen Vakuums zwischen der Fläche (3) und der Seite des Gegenstands (20), wodurch der Gegenstand (20) durch Ansaugen an der Halterung (1) befestigt wird, und
- Aufheben des teilweisen Vakuums durch Aktivieren eines Ablassventils (19) und dadurch Verbinden der Ansaugöffnung (7, 8) mit der Atmosphäre,
- wobei das Ablassventil (19), eine geschlossene Stellung und eine offene Stellung aufweist,
**gekennzeichnet durch**
- sowohl Aktivieren der Unterdruckpumpe (14) als auch Bewegen des Ablassventils (19) in die geschlossene Stellung, in Folge eines Signals von einem manuellen Schalter (12), um den Gegenstand (20) **durch** Unterdruck an der Halterung (1) zu befestigen, und
- sowohl Deaktivieren der Unterdruckpumpe (14) als auch Bewegen des Ablassventils (19) in die offene Stellung, in Folge eines Signals von einem manuellen Schalter (12), um den Gegenstand (20) sofort von der Halterung (1) zu lösen.

12. Verfahren nach Anspruch 11, wobei es sich bei dem Gegenstand (20) um einen Behälter zum Aufnehmen von Lebensmitteln handelt, wie zum Beispiel eine Pfanne, eine Bratpfanne, einen Kochtopf, einen Topf, eine Kasserolle, eine Blechdose, ein Konservenglas, ein Glas, eine Flasche, einen Krug, einen Karton, ein Schneidbrett, ein Backblech, eine Grillpfanne, einen Backstein, einen Wok, eine Tasse, einen Becher oder eine Schüssel.

13. Halterung (1) zum Befestigen eines Gegenstands (20) an der Halterung (1), wobei die Halterung (1) Folgendes aufweist:
- ein Gehäuse (2),
- wobei das Gehäuse (2) eine Fläche (3, 4) aufweist, die zum Anbringen an einer Seite des Gegenstands (20) ausgelegt ist,
- eine Ansaugöffnung (7, 8), die in der Fläche (3, 4) angeordnet ist,
- eine Unterdruckpumpe (14),
- einen Antriebsmotor (13), der funktionell mit der Unterdruckpumpe (14) gekoppelt ist,
- mindestens eine Umkehr-Unterdruckpumpe (14), die mit der Ansaugöffnung (3, 4) verbunden ist,
- ein manuelles Steuerelement (12), das mit einer Steuervorrichtung (10) gekoppelt ist,
- wobei die Steuervorrichtung (10) dazu ausgelegt ist, den Antriebsmotor (13) in Folge eines Aktivierungssignals von dem manuellen Steuerelement (12) zu aktivieren, zum Antreiben der Unterdruckpumpe zum Erzeugen mindestens eines teilweisen Vakuums zwischen der Fläche (3, 4) und der Seite des Gegenstands (20) zum Befestigen des Gegenstands (20) an der Halterung (1) durch Ansaugen,
**gekennzeichnet dadurch, dass**
- es sich bei dem Antriebsmotor um einen Umkehr-Antriebsmotor (13), bei der Unterdruckpumpe um eine Umkehr-Unterdruckpumpe (14) handelt, und
- die Steuervorrichtung (10) dazu ausgelegt ist, den Antriebsmotor (13) zumindest für eine begrenzte Dauer umzukehren und danach den Antriebsmotor (13) in Folge eines Deaktivierungssignals von dem manuellen Steuerelement (12) zu deaktivieren, zum Entfernen des mindestens teilweisen Vakuums zwischen der Fläche (3, 4) und der Seite des Gegenstands (20) zum Lösen des Gegenstands (20) von der Halterung (1).

## Revendications

1. Support (1) pour fixer un article (20) au support (1), ce support (1) comprenant :
- un carter (2),
- le boîtier (2) ayant une face (3, 4) configurée pour se fixer à un côté de l'article (20),
- un orifice d'aspiration (7, 8) disposé dans la face (3, 4),
- au moins une pompe à vide (14) reliée à l'orifice d'aspiration (7, 8) pour créer au moins un vide partiel entre la face (3, 4) et le côté de l'article (20) afin de fixer l'article (20) au support (1) par aspiration,
- un moteur d'entraînement (13) couplé fonctionnellement à la pompe à vide (14),
- un élément de commande manuelle (12) couplé à un contrôleur (10),
- une vanne de purge (19) ayant au moins une position fermée et une position ouverte,
- la vanne de purge (19) reliant fluidiquement l'orifice d'aspiration (7, 8) à l'atmosphère en position ouverte,
**caractérisé par**
- **le fait que** le contrôleur (10) est configuré :
pour activer le moteur d'entraînement (13) et déplacer la vanne de purge (19) vers la position fermée en réponse à un signal d'activation provenant de l'élément de commande manuelle (12), et
pour désactiver le moteur d'entraînement (13) et déplacer la vanne de purge (19) en position ouverte en réponse à un signal de désactivation provenant de l'élément de commande manuelle (12).

2. Support (1) selon la revendication 1, dans lequel le contrôleur (10) est couplé à la vanne de purge (19), le moteur d'entraînement (13), et l'élément de commande manuelle (12), et la vanne de purge (19) est de préférence sollicitée élastiquement vers sa position ouverte.

3. Support (1) selon l'une quelconque des revendications précédentes, dans lesquelles la vanne de purge (19) est une vanne électronique, la vanne de purge électronique (19) étant de préférence configurée pour se déplacer vers sa position ouverte lorsqu'elle reçoit un signal électrique du contrôleur (10).

4. Support (1) selon l'une quelconque des revendications précédentes, dans lequel le moteur d'entraînement (13) est un moteur d'entraînement électrique, de préférence un moteur d'entraînement électrique à courant continu.

5. Support (1) selon l'une quelconque des revendications précédentes, dans lequel l'élément de commande manuelle (12) est un commutateur, de préférence un commutateur à bascule ou un commutateur à poussoir.

6. Support (1) selon l'une quelconque des revendications précédentes, dans lequel la face (3, 4) est une face sensiblement plate (20) et de préférence configurée pour être fixée à un côté de l'article (20) par aspiration.

7. Support (1) selon l'une quelconque des revendications précédentes, dans lequel la face (3, 4) est pourvue d'un joint (5, 6) entourant l'orifice d'aspiration (7, 8).

8. Support (1) selon l'une quelconque des revendications précédentes, dans lequel le moteur d'entraînement (13) est un moteur d'entraînement électrique qui est alimenté par une batterie (11) de préférence rechargeable.

9. Support (1) selon l'une quelconque des revendications précédentes, comprenant une face supérieure (3) qui est parallèle à une face inférieure (4), et dans lequel la face supérieure (3) fait de préférence face à l'opposé de la face inférieure (4).

10. Support (1) selon l'une quelconque des revendications précédentes, dans lequel le vide au moins partiel disparaît automatiquement et instantanément lorsque la pompe à vide (14) est désactivée.

11. Procédé de fixation d'un article (20), tel qu'un réceptacle (20) destiné à recevoir un produit alimentaire, le procédé comprenant les étapes consistant à :
- fournir un support (1) ayant :
- un boîtier (2), le boîtier (2) ayant une face (3) configurée pour être fixée à un côté de l'article (20), et au moins une pompe à vide (14),
- créer par l'action de la pompe à vide (14) au moins un vide partiel entre la face (3) et le côté de l'article (20), fixant ainsi l'article (20) au support (1) par aspiration 20, et
- mettant fin au vide partiel par activation d'une vanne de purge (19) et relier ainsi l'orifice d'aspiration (7, 8) à l'atmosphère,
- ladite vanne de purge (19) ayant une position fermée et une position ouverte,
**caractérisé par**
- à la fois activer la pompe à vide (14) et déplacer la vanne de purge (19) vers la position fermée en réponse à un signal provenant d'un commutateur manuel (12), pour fixer l'article (20) au support (1) par le vide, et
- à la fois désactiver la pompe à vide (14) et déplacer la vanne de purge (19) vers la position ouverte en réponse à un signal provenant d'un commutateur manuel (12) pour libérer instantanément l'article (20) du support (1).

12. Procédé selon la revendication 11, dans lequel l'article (20) est un réceptacle destiné à recevoir un produit alimentaire, tel qu'une poêle, une poêle à frire, une casserole, une casserole, une boîte de conserve, un pot, un verre, une bouteille, une cruche, un carton, une planche à découper, une poêle à feuilles, une plaque de cuisson, une pierre à cuire, un wok, une tasse, un mug ou un bol.

13. Support (1) pour fixer un article (20) au support (1), le support (1) comprenant :
- un boîtier (2),
- le boîtier (2) ayant une face (3, 4) configurée pour être fixée sur un côté de l'article (20),
- un orifice d'aspiration (7, 8) disposé dans la face (3, 4),
- une pompe à vide (14),
- un moteur d'entraînement (13) couplé fonctionnellement à la pompe à vide (14)
- au moins une pompe à vide réversible (14) connectée à l'orifice d'aspiration (3, 4),
- un élément de commande manuelle (12) couplé à un contrôleur (10),
- ce contrôleur (10) étant configuré pour activer le moteur d'entraînement (13) en réponse à un signal d'activation provenant de l'élément de commande manuelle (12) pour entraîner la pompe à vide afin de créer au moins une dépression entre la face (3, 4) et le côté de l'article (20) pour fixer l'article (20) au support (1) par aspiration,
**caractérisé par**
- le moteur d'entraînement étant un moteur d'entraînement réversible (13), la pompe à vide étant une pompe à vide réversible (14), et
- le contrôleur (10) étant configuré pour inverser le moteur d'entraînement (13) au moins pendant un laps de temps limité et pour désactiver ensuite le moteur d'entraînement (13), en réponse à un signal de désactivation provenant de l'élément de commande manuelle (12) pour éliminer le vide partiel entre la face (3, 4) et le côté de l'article (20) pour libérer l'article (20) du support (1).
